# EUROPEAN PATENT APPLICATION

(11) **EP 4 745 674 A1**
(43) Date of publication of application: **20.05.2026**
(21) Application number: 25206238.5
(22) Date of filing: 02.10.2025
(51) Int. Cl.: G03G 15/00, G01N 21/86

(54) **SHEET CHARACTERISTIC DETECTION DEVICE AND IMAGE FORMING SYSTEM**

(30) Priority: 13.11.2024 JP 2024197851
(71) Applicant: KONICA MINOLTA, INC., Tokyo 100-7015 (JP)
(72) Inventor: Yoshikawa, Hiroyuki, Tokyo, 100-7015 (JP); Masuda, Junichi, Tokyo, 100-7015 (JP); Ogata, Satoshi, Tokyo, 100-7015 (JP); Ishikawa, Akimasa, Tokyo, 100-7015 (JP); Suzuki, Daichi, Tokyo, 100-7015 (JP)
(74) Representative: Hoffmann Eitle

(57) **Abstract**

The present invention provides a sheet characteristic detection device capable of detecting whether a shutter is opened or closed. The device includes: a housing 41 provided with an opening 41H; a light emitter 42 emitting light toward the opening; a light receiver 44 receiving reflected light of the light emitted from the light emitter; a shutter 45 switchable between a closed state and an open state; and a drive mechanism 46 driving the shutter. The device detects a characteristic of a sheet by applying light from the light emitter to the sheet and detecting reflected light that is reflected by the sheet by the light receiver. The device includes a detector that detects whether the shutter is opened or closed, using a phenomenon in which the shutter blocks light from the light emitter or reflected light of the light during opening or closing of the shutter.

## Description

### Background of the Invention

### 1. Technical Field

The present invention relates to a sheet characteristic detection device and an image forming system.

### 2. Description of Related art

In order to provide a high-quality printed product by an image forming apparatus, it is necessary to recognize characteristics of a sheet to be used for printing and set printing parameters according to the characteristics of the sheet.

In this connection, Japanese Unexamined Patent Application Publication No. 2020-190420 discloses a sheet characteristic detection device (sheet material identification device) that identifies the type of sheet by irradiating the sheet with light and receiving the light reflected from the sheet. The sheet characteristic detection device disclosed in Japanese Unexamined Patent Application Publication No. 2020-190420 irradiates, through an opening provided in a housing, a sheet with light from a light emitter housed inside the housing and detects reflected light from the sheet by a light receiver housed inside the housing, thereby identifying the type of the sheet. The opening of the housing is opened and closed by a shutter. Normally, the shutter is in a closed state, and when the sheet is irradiated with light, the shutter transitions from the closed state to an open state.

### Summary of the Invention

However, the shutter may not properly transition from the closed state to the open state due to deterioration of a drive mechanism or a change in environment (humidity/temperature). If the shutter does not properly transition from the closed state to the open state, the characteristic value of the sheet is not correctly detected, which is not preferable. For this reason, it is desired to detect whether the shutter is opened or closed by the sheet characteristic detection device.

The present invention has been made in consideration of the above-described problem. Therefore, an object of the present invention is to provide a sheet characteristic detection device capable of detecting whether a shutter is opened or closed.

Another object of the present invention is to provide an image forming system including the sheet characteristic detection device.

The above objects of the present invention are achieved by the following means.
(1) A sheet characteristic detection device including: a housing provided with an opening; a light emitter housed in the housing and emitting light toward the opening; a light receiver housed in the housing and receiving reflected light of the light emitted from the light emitter; a shutter housed in the housing and switchable between a closed state in which the shutter closes the opening and an open state in which the shutter opens the opening; and a drive mechanism housed in the housing and driving the shutter, the sheet characteristic detection device detecting a characteristic of a sheet by applying light from the light emitter to the sheet through the opening and detecting reflected light that is reflected by the sheet and that transmits through the opening by the light receiver, the sheet characteristic detection device including a detector that detects whether the shutter is opened or closed, using a phenomenon in which the shutter blocks light from the light emitter or reflected light of the light during opening or closing of the shutter.
(2) The sheet characteristic detection device according to (1), wherein, when the phenomenon in which the shutter blocks light from the light emitter or reflected light of the light does not occur after an opening operation of the shutter is instructed, the detector detects that the shutter remains in the closed state and is unable to transition to the open state.
(3) The sheet characteristic detection device according to (1) or (2), wherein the detector detects whether the shutter is opened or closed based on a detection value of the light receiver.
(4) The sheet characteristic detection device according to (2), wherein, when a difference between a detection value of the light receiver before the opening operation of the shutter is instructed and a detection value of the light receiver after a predetermined time has elapsed since the opening operation is instructed is equal to or less than a predetermined threshold value, the detector detects that the shutter remains in the closed state and is unable to transition to the open state.
(5) The sheet characteristic detection device according to (1) or (2), further including a calibration plate provided on a surface of the shutter facing the light emitter in the closed state.
(6) The sheet characteristic detection device according to (1) or (2), wherein the light receiver includes a plurality of light receivers, and the detector detects whether the shutter is opened or closed based on a detection value of one light receiver selected from the plurality of light receivers.
(7) The sheet characteristic detection device according to (1) or (2), wherein the light receiver includes a first light receiver that receives specular reflection light from the sheet and a second light receiver that receives diffuse reflection light from the sheet, and the detector detects whether the shutter is opened or closed based on a detection value of the second light receiver.
(8) The sheet characteristic detection device according to (2), wherein, when the detector detects that the shutter remains in the closed state and is unable to transition to the open state after the opening operation of the shutter is instructed, the opening operation of the shutter is again instructed, and an operation of detecting whether the shutter is opened or closed is repeated.
(9) The sheet characteristic detection device according to (8), wherein, when the detector detects that the shutter has transitioned from the closed state to the open state before the operation is repeated a predetermined number of times, an operation of detecting the characteristic of the sheet is performed, and when the detector does not detect that the shutter has transitioned from the closed state to the open state even after the operation has been repeated a predetermined number of times, a notification indicating an abnormality is provided.
(10) The sheet characteristic detection device according to (2), wherein the housing is provided on a discharge path of the sheet, and only a discharge of the sheet is performed when the detector detects that the shutter remains in the closed state and is unable to transition to the open state.
(11) The sheet characteristic detection device according to (1) or (2), wherein, when an abnormality other than an opening/closing failure of the shutter is detected, a notification indicating the abnormality is provided so as to be distinguishable from the opening/closing failure of the shutter.
(12) The sheet characteristic detection device according to (11), wherein the abnormality other than the opening/closing failure of the shutter includes an abnormality of the light emitter.
(13) An image forming system including the sheet characteristic detection device according to (1) or (2).

According to the present invention, whether the shutter is opened or closed is detected.

### Brief Description of the Drawings

Advantages and features provided by one or more embodiments of the present invention will be more fully understood from the following detailed description and the accompanying drawings, which are for purposes of illustration only and are not intended to define the limits of the invention.
Fig. 1 is a diagram illustrating a schematic configuration of an image forming system;
Fig. 2 is a schematic diagram illustrating a schematic configuration of a sheet characteristic detector;
Fig. 3 is a perspective view illustrating a schematic configuration of the sheet characteristic detector;
Fig. 4 is a cross-sectional view taken along line IV-IV in Fig. 3;
Fig. 5 is a timing chart illustrating an operation of each element of the sheet characteristic detector;
Fig. 6A is a schematic diagram for describing operation of each element of the sheet characteristic detector;
Fig. 6B is a diagram subsequent to Fig. 6A;
Fig. 6C is a diagram subsequent to Fig. 6B;
Fig. 7 is a flowchart illustrating a procedure of sheet characteristic detection processing;
Fig. 8 is a diagram illustrating an example of an abnormality notification screen; and
Fig. 9 is a diagram illustrating another example of the abnormality notification screen.

### Detailed Description

Hereinafter, an embodiment of the present invention will be described with reference to the drawings. It is to be noted that the scope of the present invention is not limited to the disclosed embodiment.

Note that in the description of the drawings, the same components are denoted by the same reference signs, and redundant descriptions will not be repeated. In addition, dimensional ratios in the drawings are exaggerated for convenience of description and may be different from actual ratios. Furthermore, a sheet according to the present embodiment includes printing sheet and various films. In particular, the printing sheet includes a sheet produced by using mechanical pulp and/or chemical pulp derived from plants. The types of sheet include gloss paper, matte paper, plain paper, high-gloss paper, and coated paper.

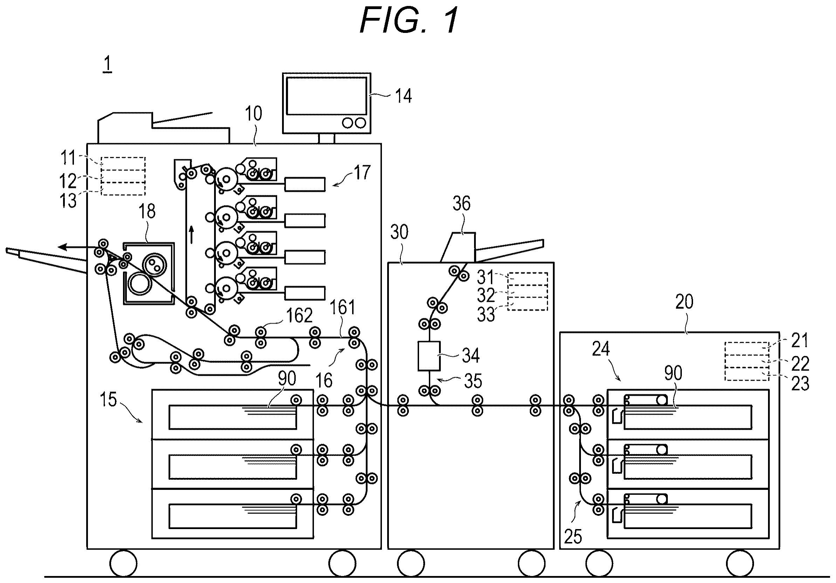

Fig. 1 is a diagram illustrating a schematic configuration of an image forming system 1 according to an embodiment of the present invention.

As illustrated in Fig. 1, the image forming system 1 includes an image forming apparatus 10, a sheet feed device 20, and a sheet characteristic detection device 30. The apparatus and devices are connected in the order of the sheet feed device 20, the sheet characteristic detection device 30, and the image forming apparatus 10 along the conveyance direction of a sheet 90 fed from the sheet feed device 20.

### <Image forming apparatus 10>

The image forming apparatus 10 includes a controller 11, a storage 12, a communicator 13, an operation display 14, a sheet feeder 15, a conveyor 16, an image former 17, and a fixer 18. These elements are connected to each other via a bus for exchanging signals.

The controller 11 includes a central processing unit (CPU), and performs control of the above-described elements and various types of arithmetic processing in accordance with a program.

The storage 12 includes a read only memory (ROM) that stores various programs and various types of data in advance, a random access memory (RAM) that temporarily stores programs and data as a work area, and a hard disk or the like that stores various programs and various types of data.

The communicator 13 is an interface for communicating with other devices. The communicator 13 transmits and receives various types of data, various signals, and the like to and from, for example, the sheet feed device 20 and the sheet characteristic detection device 30.

The operation display 14 includes a touch screen, a numeric keypad, a start button, a stop button, and the like, and is used for displaying various types of information and inputting various instructions.

The sheet feeder 15 includes sheet feed trays for storing the sheets 90 to be used for printing, and feeds the sheets 90 stored in each sheet feed tray one by one.

The conveyor 16 includes a conveyance path 161, a plurality of conveyance roller pairs 162, and a drive motor (not illustrated) that drives the conveyance roller pairs 162, and conveys the sheet 90 fed from the sheet feed device 20 or the sheet 90 fed from the sheet feeder 15 along the conveyance path 161.

The image former 17 forms an image on the sheet 90 fed from the sheet feed device 20 or the sheet 90 fed from the sheet feeder 15. The image former 17 forms an image on the sheet 90 by using a known image forming process such as an electrophotographic method including steps of charging, exposing, developing, and transferring.

The fixer 18 includes a heating roller heated by a heater and a pressure roller, and heats and pressurizes the sheet 90 on which the image has been formed by the image former 17, to thereby fix the image on the sheet 90.

### <Sheet feed device 20>

The sheet feed device 20 includes a controller 21, a storage 22, a communicator 23, a sheet feeder 24, and a conveyor 25. These elements are connected to each other via a bus for exchanging signals. Note that the above-described elements of the sheet feed device 20 have the same functions as the above-described elements of the image forming apparatus 10, and therefore, the description thereof is omitted.

### <Sheet characteristic detection device 30>

The sheet characteristic detection device 30 includes a controller 31, a storage 32, a communicator 33, a sheet characteristic detector 34, a conveyor 35, and a sheet ejector 36. These elements are connected to each other via a bus for exchanging signals. Among the above-described elements of the sheet characteristic detection device 30, the description of elements having the same functions as those of the above-described elements of the image forming apparatus 10 will be omitted.

The sheet characteristic detector 34 detects a characteristic of the sheet 90. The sheet characteristic detector 34 is provided in a conveyance path (discharge path) branched upward from a conveyance path of the sheet 90 fed from the sheet feed device 20 to the image forming apparatus 10, and detects the characteristic of the sheet 90 conveyed to the discharge path. The sheet characteristic detector 34 detects the characteristic of the sheet 90 by irradiating the sheet 90 with light and detecting reflected light. The sheet characteristic detector 34 will be described in detail later.

The sheet ejector 36 includes a sheet ejection tray to which the sheet 90 conveyed to the discharge path is ejected, and ejects the sheet 90 that has passed through the sheet characteristic detector 34 to the outside.

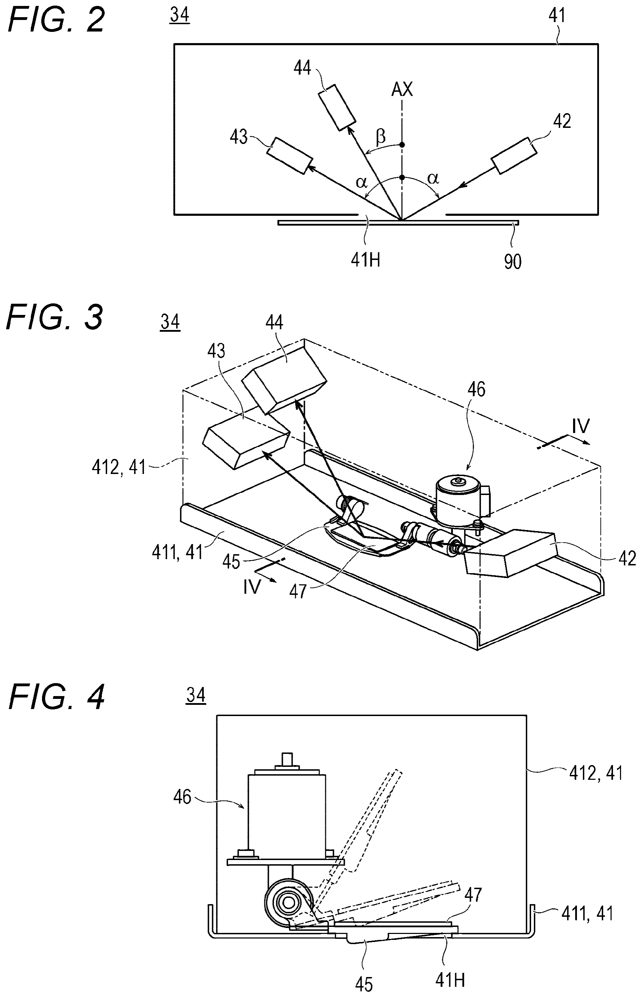

The storage unit 32 of the sheet characteristic detection device 30 stores an identification program for identifying the type of sheet and a detection program for detecting whether a shutter 45 (see Fig. 3) of the sheet characteristic detector 34 is opened or closed. The controller 31 of the sheet characteristic detection device 30 functions as a detector for detecting whether the shutter 45 of the sheet characteristic detector 34 is opened or closed by executing the detection program. In addition, the controller 31 of the sheet characteristic detection device 30 includes a drive circuit and a signal processing circuit for driving each element, which will be described later, of the sheet characteristic detector 34.

The image forming apparatus 10, the sheet feed device 20, and the sheet characteristic detection device 30 may include constituent elements other than the above-described constituent elements, and may not include some of the above-described constituent elements.

### <Sheet characteristic detector 34>

Next, the sheet characteristic detector 34 of the sheet characteristic detection device 30 will be described in detail with reference to Figs. 2 to 4.

Fig. 2 is a schematic diagram illustrating a schematic configuration of the sheet characteristic detector 34, and Fig. 3 is a perspective view illustrating a schematic configuration of the sheet characteristic detector 34. Fig. 4 is a cross-sectional view taken along line IV-IV in Fig. 3.

As illustrated in Figs. 2 to 4, the sheet characteristic detector 34 includes a housing 41, a light emitter 42, a first light receiver 43, a second light receiver 44, the shutter 45, a drive mechanism 46, and a calibration plate 47.

The housing 41 houses the light emitter 42, the first light receiver 43, the second light receiver 44, the shutter 45, the drive mechanism 46, and the calibration plate 47. The housing 41 has a substantially box shape and includes a bottom portion 411 and a cover 412 that covers the bottom portion 411. The bottom portion 411 is provided with an opening 41H. The opening 41H is provided so as to face the conveyance path along which the sheet 90 is conveyed.

The light emitter 42 emits light toward the opening 41H of the housing 41. The light emitter 42 is disposed such that an optical axis is inclined at a first angle a (for example, 75 degrees) with respect to a reference axis AX orthogonal to the bottom portion 411 of the housing 41, and obliquely irradiates the opening 41H with light. The light emitter 42 is, for example, a light emitting diode (LED) and is subjected to pulse width modulation (PWM) control by the controller 31 of the sheet characteristic detection device 30. When the opening 41H is open, the light from the light emitter 42 passes through the opening 41H and enters the sheet 90.

The first light receiver 43 receives reflected light of light from the light emitter 42. The first light receiver 43 is, for example, a photodiode, and is disposed such that an optical axis thereof is inclined at a first angle α (for example, 75 degrees) with respect to the reference axis AX orthogonal to the bottom portion 411 of the housing 41. When the opening 41H is open, the first light receiver 43 receives specular reflection light that is specularly reflected on the sheet 90 and passes through the opening 41H.

The second light receiver 44 receives reflected light of the light from the light emitter 42. The second light receiver 44 is, for example, a photodiode, and is disposed such that the optical axis is inclined at a second angle β (for example, 30 degrees) with respect to the reference axis AX orthogonal to the bottom portion 411 of the housing 41. When the opening 41H is open, the second light receiver 44 receives diffuse reflection light that is diffusely reflected by the sheet 90 and passes through the opening 41H.

The optical axes of the light emitter 42, the first light receiver 43, and the second light receiver 44 are disposed on the same plane including the reference axis AX. The controller 31 of the sheet characteristic detection device 30 identifies the type of the sheet 90 on the basis of the detection values of the first and second light receivers 43 and 44. According to such a configuration, the type of the sheet 90 is identified using the detection values of the two light receivers 43 and 44, whereby the accuracy of identifying the type of the sheet 90 is improved as compared with a case where only the detection value of one light receiver is used.

The shutter 45 is configured to be switchable between a closed state in which the opening 41H of the housing 41 is closed and an open state in which the opening 41H is opened. The shutter 45 is rotated by the drive mechanism 46 to switch between the closed state and the open state. Usually, the shutter 45 is in a closed state, and when the characteristic of the sheet 90 is detected by the sheet characteristic detector 34, the shutter 45 transitions from the closed state to the open state. Note that the shutter 45 can be brought into two stages of the open state. That is, the shutter 45 can be in a first open state (a broken line in Fig. 4) in which the shutter 45 is rotated by a predetermined value or more with respect to the bottom portion 411 and a second open state (a dash-dotted line in Fig. 4) in which the shutter 45 is rotated at an angle less than the predetermined value with respect to the bottom portion 411. When the characteristic of the sheet 90 is detected by the sheet characteristic detector 34, the shutter 45 is brought into the first open state and the opening 41H is fully opened.

The drive mechanism 46 drives the shutter 45. The drive mechanism 46 includes, for example, a stepping motor, and rotates the shutter 45 around a rotation axis parallel to the bottom portion 411 of the housing 41. The drive mechanism 46 is controlled by the controller 31 of the sheet characteristic detection device 30. The shutter 45 may not be properly opened and closed due to deterioration of the drive mechanism 46 or a change in environment (humidity/temperature). For example, there may be a case where the shutter 45 and the drive mechanism 46 expand due to a temperature increase, by which the shutter 45 does not open properly.

The calibration plate 47 is provided on an inner surface of the shutter 45. The calibration plate 47 is for calibrating the sheet characteristic detector 34, and is a plate body having a predetermined smoothness, such as a white resin, for example. The calibration plate 47 is disposed so as to specularly reflect light emitted from the light emitter 42 toward the first light receiver 43 and diffusely reflect the light toward the second light receiver 44 in a closed state in which the shutter 45 closes the opening 41H. Note that the state (the amount of light or the like) of light emitted from the light emitter 42 changes due to the influence of aging, environment, or the like, and therefore is periodically calibrated. In the present embodiment, the light emission conditions and the like are adjusted on the basis of optical information regarding the reflected light reflected by the calibration plate 47, and thus the sheet characteristic detector 34 is calibrated.

### <Detection of opening/closing of shutter 45>

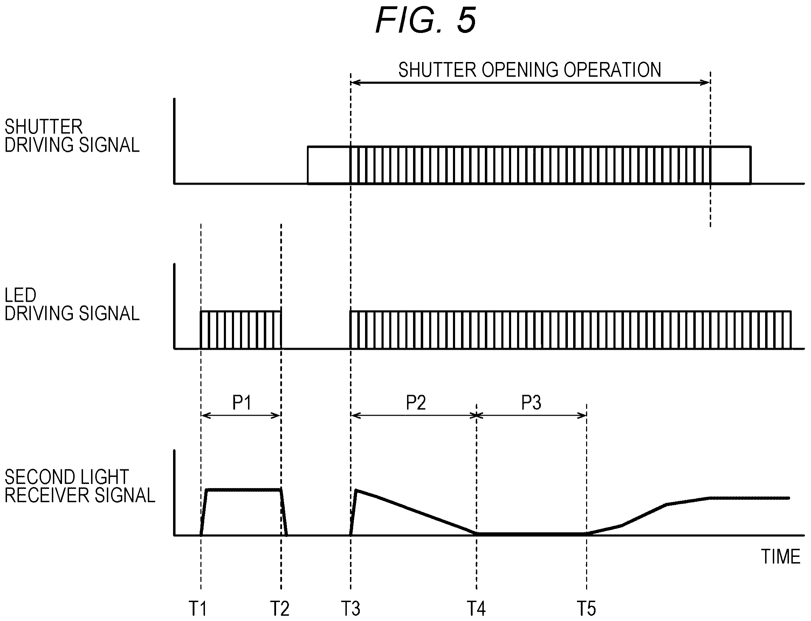

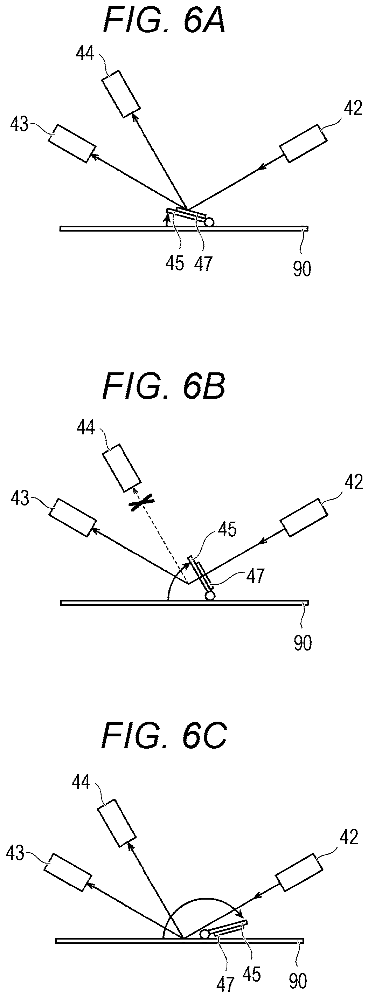

Next, the operation of the sheet characteristic detection device 30 for detecting whether the shutter 45 is opened or closed will be described with reference to Figs. 5 and 6. When detecting the characteristics of the sheet 90, the sheet characteristic detection device 30 detects that the shutter 45 properly transitions from the closed state to the open state. The sheet characteristic detection device 30 detects whether the shutter 45 is opened or closed on the basis of the detection value of the second light receiver 44.

Fig. 5 is a timing chart illustrating the operation of each element of the sheet characteristic detector 34 when the shutter 45 transitions from the closed state to the open state.

Figs. 6A to 6C are schematic diagrams for describing operations of the above-described elements in each period of the timing chart.

In Fig. 5, a shutter driving signal is a signal for controlling the opening operation of the shutter 45, and an LED driving signal is a signal for controlling the light emitting operation of the light emitter 42. A second light receiver signal is an output signal indicating an amount of light (detection value) received by the second light receiver 44.

As illustrated in Fig. 5, first, in a first period P1 from a first time point T1 to a second time point T2, the LED driving signal (pulse signal) is generated, so that the light emitter 42 emits light. The light emitted from the light emitter 42 is reflected by the calibration plate 47 and reaches the second light receiver 44.

In the first period P1, the detection value (AD conversion value of the output signal) of the second light receiver 44 is acquired a plurality of times, and the average value of the plurality of detection values is calculated as a first detection value ADA of the second light receiver 44. The first detection value ADA of the second light receiver 44 is stored in the storage 32 of the sheet characteristic detection device 30 as information for detecting whether the shutter 45 is opened or closed. The first period P1 is, for example, 55 milliseconds.

Thereafter, at a third time point T3, the shutter driving signal (pulse signal) and the LED driving signal are generated at the same time. When the shutter driving signal (pulse signal) is generated, the drive mechanism 46 is driven, and the shutter 45 starts to rotate (opening operation). The opening degree of the shutter 45 increases with the lapse of time. Furthermore, since the LED driving signal is generated again, the light emitter 42 continues to emit light after the third time point T3.

In a second period P2 from the third time point T3 to a fourth time point T4, the light emitted from the light emitter 42 is reflected by the calibration plate 47 and reaches the second light receiver 44 as illustrated in Fig. 6A. However, as the opening degree of the shutter 45 increases with the lapse of time, the light reflected by the calibration plate 47 and reaching the second light receiver 44 decreases, and the amount of light received by the second light receiver 44 decreases. At the fourth time point T4, the amount of light received by the second light receiver 44 is substantially zero. The second period P2 is, for example, 75 milliseconds.

In a third period P3 from the fourth time point T4 to a fifth time point T5, the light emitted from the light emitter 42 and the reflected light of the light emitted from the light emitter 42 are blocked by the shutter 45, and the light does not reach the second light receiver 44 as illustrated in Fig. 6B. Therefore, in the third period P3, although the opening degree of the shutter 45 increases with the lapse of time, the amount of light received by the second light receiver 44 remains substantially zero.

In the third period P3, the detection value (AD conversion value of the output signal) of the second light receiver 44 is acquired a plurality of times, and the average value of the plurality of detection values is calculated as a second detection value ADB of the second light receiver 44. The second detection value ADB of the second light receiver 44 is stored in the storage 32 of the sheet characteristic detection device 30 as information for detecting whether the shutter 45 is opened or closed. The third period P3 is, for example, 55 milliseconds.

Thereafter, when the opening degree of the shutter 45 reaches a specific opening degree at the fifth time point T5, the light emitted from the light emitter 42 passes through the opening portion 41H and enters the front face of the sheet 90. Then, the light reflected on the front face of the sheet 90 passes through the opening 41H and reaches the second light receiver 44. Therefore, at the fifth time point T5, the amount of light received by the second light receiver 44 starts to increase.

In the period after the fifth time point T5, the light emitted from the light emitter 42 is reflected by the sheet 90 and reaches the second light receiver 44 as illustrated in Fig. 6C. As the opening degree of the shutter 45 increases with the lapse of time, the amount of light reaching the second light receiver 44 increases. The amount of light received by the second light receiver 44 continues to increase until the opening 41H is substantially fully opened.

As described above, in the sheet characteristic detection device 30 according to the present embodiment, when the shutter 45 properly transitions from the closed state to the open state, a phenomenon in which the shutter 45 temporarily blocks the light (the optical path of the second light receiver 44) during the opening operation of the shutter 45 occurs as illustrated in Fig. 6B. Therefore, when the shutter 45 properly transitions from the closed state to the open state after the opening operation of the shutter 45 is instructed, the amount of light received by the second light receiver 44 temporarily becomes zero in the third period P3.

On the other hand, when the shutter 45 in the sheet characteristic detection device 30 according to the present embodiment remains in the closed state and cannot transition from the closed state to the open state due to an abnormality of the shutter 45, the phenomenon in which the shutter 45 temporarily blocks the light does not occur. Therefore, in a case where the shutter 45 remains in the closed state and cannot transition to the open state after the opening operation of the shutter 45 is instructed, the amount of light received by the second light receiver 44 in the third period P3 does not become substantially zero and indicates substantially the same value as the amount of light received in the first period P1.

In view of this, the sheet characteristic detection device 30 according to the present embodiment compares the first detection value ADA of the second light receiver 44 in the first period P1 and the second detection value ADB of the second light receiver 44 in the third period P3 to detect whether the shutter 45 is opened or closed. Specifically, when the difference between the first detection value ADA and the second detection value ADB exceeds a predetermined threshold value, the sheet characteristic detection device 30 detects that the shutter 45 has properly transitioned from the closed state to the open state. On the other hand, when the difference between the first detection value ADA and the second detection value ADB is equal to or less than the predetermined threshold value, the sheet characteristic detection device 30 detects that the shutter 45 remains in the closed state and cannot transition to the open state.

### <Sheet characteristic detection processing>

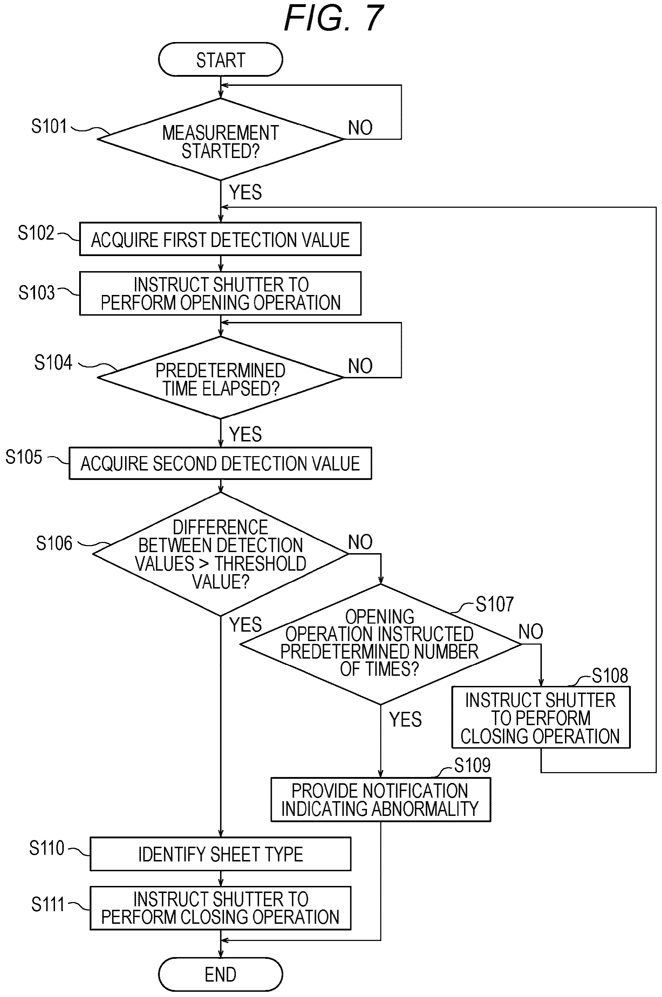

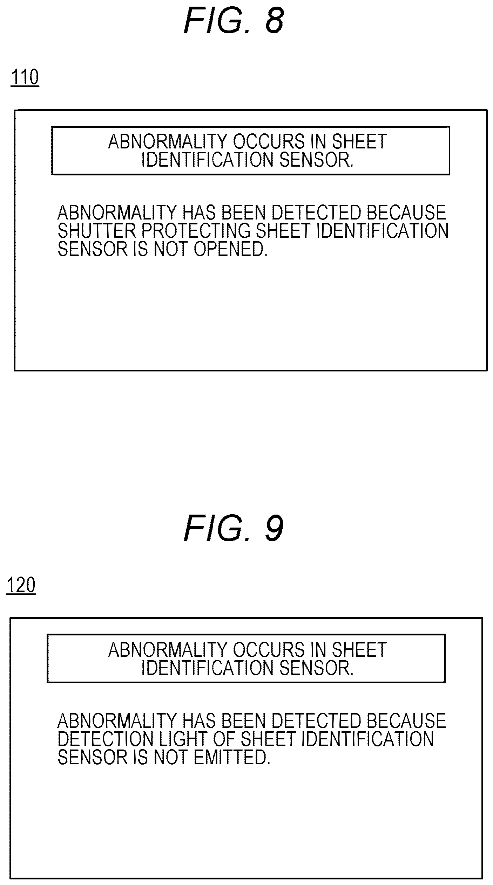

Next, the operation of the sheet characteristic detection device 30 for detecting the characteristic of the sheet will be described with reference to Figs. 7 and 8. Fig. 7 is a flowchart illustrating a procedure of sheet characteristic detection processing. Note that the processing of the flowchart illustrated in Fig. 7 is executed by the controller 31 in accordance with the program stored in the storage 32 of the sheet characteristic detection device 30.

### (Step S101)

First, the sheet characteristic detection device 30 determines whether or not an instruction to start measurement of the sheet characteristics is issued. More specifically, the sheet characteristic detection device 30 determines, for example, whether or not a signal instructing to start measurement of the sheet characteristics has been received from the image forming apparatus 10.

When determining that the instruction to start measurement of the sheet characteristics is not issued (NO in step S101), the sheet characteristic detection device 30 waits until the instruction to start measurement of the sheet characteristics is issued. On the other hand, when determining that the instruction to start measurement of the sheet characteristics is issued (YES in step S101), the sheet characteristic detection device 30 proceeds to the process of step S102.

### (Step S102)

When determining that the instruction to start measurement of the sheet characteristics is issued (YES in step S101), the sheet characteristic detection device 30 acquires the first detection value of the second light receiver 44. More specifically, the sheet characteristic detection device 30 generates an LED driving signal to cause the light emitter 42 to emit light, and averages a plurality of detection values of the second light receiver 44 to acquire the first detection value ADA. Prior to the acquisition of the first detection value ADA, the amount of light of the light emitter 42 may be calibrated on the basis of the detection value of the first light receiver 43 or the second light receiver 44.

### (Step S103)

Subsequently, the sheet characteristic detection device 30 instructs the shutter 45 to perform the opening operation. More specifically, the sheet characteristic detection device 30 generates a shutter driving signal (pulse signal) to operate the drive mechanism 46. When the shutter 45 or the drive mechanism 46 has no abnormality, the shutter 45 starts the opening operation. On the other hand, when the shutter 45 or the drive mechanism 46 has an abnormality, the shutter 45 does not start the opening operation and maintains the closed state.

### (Step S104)

Subsequently, the sheet characteristic detection device 30 determines whether or not a predetermined time has elapsed. More specifically, the sheet characteristic detection device 30 determines whether or not a predetermined time (for example, 75 milliseconds) has elapsed after instructing the shutter 45 to perform the opening operation in the process of step S103. Here, the predetermined time is a time during which a phenomenon in which the shutter 45 blocks light (see Fig. 6B) occurs during the opening operation of the shutter 45 so that the amount of light received by the second light receiver 44 becomes substantially zero. The predetermined time is a time corresponding to the second period P2 in Fig. 5.

When determining that the predetermined time has not elapsed (NO in step S104), the sheet characteristic detection device 30 waits until the predetermined time elapses. On the other hand, when determining that the predetermined time has elapsed (YES in step S104), the sheet characteristic detection device 30 proceeds to the process of step S105.

### (Step S105)

When determining that the predetermined time has elapsed (YES in step S104), the sheet characteristic detection device 30 acquires the second detection value of the second light receiver 44. More specifically, the sheet characteristic detection device 30 generates an LED driving signal to cause the light emitter 42 to emit light, and averages a plurality of detection values of the second light receiver 44 to acquire the second detection value ADB. As described above, when the shutter 45 properly performs the opening operation, the second detection value ADB is substantially zero. On the other hand, when the shutter 45 does not perform the opening operation and maintains the closed state, the second detection value ADB is substantially the same value as the first detection value ADA.

### (Step S106)

Subsequently, the sheet characteristic detection device 30 determines whether or not the difference between the detection values of the second light receiver 44 is larger than a predetermined threshold value. More specifically, the sheet characteristic detection device 30 determines whether or not the difference between the first detection value ADA acquired in the process of step S102 and the second detection value ADB acquired in the process of step S105 is larger than the predetermined threshold value. The predetermined threshold value is set, for example, based on an experiment or the like.

When determining that the difference between the detection values of the second light receiver 44 is larger than the predetermined threshold value (YES in step S106), the sheet characteristic detection device 30 determines that the shutter 45 has properly transitioned from the closed state to the open state, and proceeds to the process of step S110. On the other hand, when determining that the difference between the detection values of the second light receiver 44 is equal to or less than the predetermined threshold value (NO in step S106), the sheet characteristic detection device 30 determines that the shutter 45 is still in the closed state, and proceeds to the process of step S107.

### (Step S107)

When determining that the difference between the detection values of the second light receiver 44 is equal to or less than the predetermined threshold value (NO in step S106), the sheet characteristic detection device 30 determines whether or not the opening operation of the shutter 45 is instructed a predetermined number of times. More specifically, the sheet characteristic detection device 30 determines whether or not the opening operation of the shutter 45 is instructed, for example, three times.

When determining that the opening operation of the shutter 45 is instructed a predetermined number of times (YES in step S107), the sheet characteristic detection device 30 proceeds to the process of step S109. On the other hand, when determining that the opening operation of the shutter 45 is not instructed a predetermined number of times (NO in step S107), the sheet characteristic detection device 30 proceeds to the process of step S108.

### (Step S108)

When determining that the opening operation of the shutter 45 is not instructed a predetermined number of times (NO in step S107), the sheet characteristic detection device 30 instructs the shutter 45 to perform a closing operation, and returns to the process of step S102. More specifically, the sheet characteristic detection device 30 first waits for a time (e.g., 256 milliseconds) required for completion of the opening operation of the shutter 45, then further waits for a predetermined time (500 milliseconds), and then generates a shutter driving signal to instruct the shutter 45 to perform the closing operation. Further, the sheet characteristic detection device 30 waits for a time required for completion of the closing operation (e.g., 256 milliseconds), then further waits for a predetermined time (500 milliseconds), and then returns to the process of step S102. As a result, the processes of steps S102 to S108 are repeated until it is determined in the process of step S106 that the difference between the detection values of the second light receiver 44 is equal to or less than the predetermined threshold value, or until it is determined in the process of step S107 that the opening operation is instructed a predetermined number of times.

### (Step S109)

On the other hand, when determining that the opening operation of the shutter 45 is instructed a predetermined number of times in the process of step S107 (YES in step S107), the sheet characteristic detection device 30 provides a notification indicating an abnormality and ends the processing. More specifically, the sheet characteristic detection device 30 displays, for example, on the operation display 14 of the image forming apparatus 10, an abnormality notification screen 110 (see Fig. 8) for providing a notification indicating that the shutter 45 remains in the closed state and cannot transition to the open state. Then, the sheet characteristic detection device 30 ends the processing.

Note that in the image forming system 1 according to the present embodiment, even in a case where the shutter 45 remains in the closed state and cannot transition to the open state, the sheet 90 conveyed to the sheet characteristic detector 34 is ejected to the outside from the sheet ejector 36.

### (Step S110)

On the other hand, when determining that the difference between the detection values of the second light receiver 44 is larger than the predetermined threshold value (YES in step S106) in the process of step S106, the sheet characteristic detection device 30 identifies the type of the sheet 90. More specifically, the sheet characteristic detection device 30 generates an LED driving signal to cause the light emitter 42 to emit light, acquires detection values of the first and second light receivers 43 and 44, and identifies the type of the sheet 90 on the basis of the detection values of the first and second light receivers 43 and 44.

### (Step S111)

Then, the sheet characteristic detection device 30 instructs the shutter 45 to perform the closing operation, and ends the processing. More specifically, the sheet characteristic detection device 30 generates a shutter driving signal, instructs the shutter 45 to perform the closing operation, and ends the processing. As a result, the shutter 45 transitions from the open state to the closed state, so that the opening 41H of the housing 41 is closed.

As described above, according to the processing of the flowchart illustrated in Fig. 7, the shutter 45 is shifted from the closed state to the open state when the characteristic of the sheet is detected. At this time, it is detected that the shutter 45 has properly transitioned from the closed state to the open state on the basis of a change in the amount of light (detection value) received by the second light receiver 44. In a case where it is not detected that the shutter 45 has properly transitioned from the closed state to the open state, the opening operation of the shutter 45 is repeatedly instructed. Then, in a case where it is not detected that the shutter 45 has transitioned from the closed state to the open state even after the instruction has been repeated a predetermined number of times, a notification indicating an abnormality is provided to a user.

As described above, according to the sheet characteristic detection device 30 of the present embodiment, it is detected that the shutter 45 has properly transitioned from the closed state to the open state by using the phenomenon in which the shutter 45 blocks light emitted from the light emitter 42 or the reflected light of the light emitted from the light emitter 42 during the opening operation of the shutter 45. With this configuration, the operation for detecting the characteristic of the sheet 90 is performed in a state where the opening 41H is reliably opened, whereby the characteristic value of the sheet 90 can be correctly detected.

Furthermore, according to the sheet characteristic detection device 30 of the present embodiment, whether the shutter 45 is opened or closed is detected by using the configuration (the light emitter 42 and the first and second light receivers 43 and 44) for detecting the characteristic of the sheet 90. With this configuration, the configuration for detecting the characteristic of the sheet 90 (light for detecting the characteristic of the sheet 90) is also used as the configuration for detecting whether the shutter 45 is opened or closed (light for detecting whether the shutter 45 is opened or closed), whereby it is possible to detect whether the shutter 45 is opened or closed without adding a new configuration.

In the sheet characteristic detection device 30 according to the present embodiment, in a case where an abnormality other than the opening/closing failure of the shutter is detected, such as a case where the light emitter 42 does not emit light, an abnormality notification screen different from the abnormality notification screen for providing a notification indicating the opening/closing failure of the shutter 45 is displayed, and the notification indicating such abnormality is provided. Specifically, an abnormality notification screen 120 for providing a notification indicating that the LEDs constituting the light emitter do not emit light, for example, is displayed on the operation display 14 of the image forming apparatus 10 as illustrated in Fig. 9. With this configuration, the user of the image forming system 1 can distinguish and recognize various abnormalities occurring in the sheet characteristic detection device 30.

The present invention is not limited to the above-described embodiment, and various modifications can be made within the scope of the claims.

For example, in the above-described embodiment, whether the shutter 45 is opened or closed is detected on the basis of the detection value of the second light receiver 44. However, unlike the above-described embodiment, whether the shutter 45 is opened or closed may be detected on the basis of the detection value of the first light receiver 43.

In addition, the above-mentioned embodiment has described, as an example, the case where it is detected that the shutter has properly transitioned from the closed state to the open state after the opening operation of the shutter 45 is instructed. However, the detection of whether the shutter is opened or closed is not limited to detecting that the shutter has transitioned from the closed state to the open state. It may be detected that the shutter has properly transitioned from the open state to the closed state after the closing operation of the shutter 45 is instructed. In this case, it is detected that the shutter 45 has properly transitioned from the open state to the closed state by using the phenomenon in which the shutter 45 blocks light emitted from the light emitter 42 or the reflected light of the light emitted from the light emitter 42 during the closing operation of the shutter 45.

Furthermore, in the above-described embodiment, the housing 41 of the sheet characteristic detector 34 is provided in such a manner as to face the central portion of the sheet 90 to be conveyed in the conveyance path. However, unlike the above-described embodiment, the housing 41 of the sheet characteristic detector 34 may be configured to be movable according to the position of the sheet 90. In addition, a light source other than the LED may be used for the light emitter 42 of the sheet characteristic detector 34. For example, in a case where a white light source is used as the light emitter 42, white light may be received by the light receivers 43 and 44, and light having a characteristic wavelength extracted from the white light may be selectively received.

Furthermore, in the above-described embodiment, the sheet characteristic detection device 30 is provided separately from the image forming apparatus 10 and the sheet feed device 20. However, the sheet characteristic detection device 30 may be provided integrally with the image forming apparatus 10, or may be provided integrally with the sheet feed device 20.

The processing described in the foregoing embodiment with reference to the flowchart is divided in accordance with main processing tasks for ease of the understanding of each processing task. The present invention is not limited by the way of dividing the processing steps. Each processing task can be further divided into more processing steps. Alternatively, one processing step may involve more processing tasks.

The means and methods for performing various kinds of processing in the image forming system 1 according to the above-described embodiment can be implemented using either a dedicated hardware circuit or a programmed computer. For example, the program may be provided by a computer-readable recording medium such as a universal serial bus (USB) memory or a digital versatile disc (DVD)-ROM, or may be provided online via a network such as the Internet. In this case, the program recorded on the computer-readable recording medium is usually transferred to and stored in a storage such as a hard disk. In addition, the above program may be offered as standalone application software or may be incorporated, as a function of the image forming system 1, into software for the apparatus of the image forming system 1.

While the embodiment of the present invention has been described and illustrated in detail, the disclosed embodiment has been created for purposes of illustration and example only, and not limitation. The scope of the present invention is to be interpreted by the wording of the appended claims.

### Reference Signs List

- 1: Image forming system
- 10: Image forming apparatus
- 11, 21, 31: Controller
- 12, 22, 32: Storage
- 13, 23, 33: Communicator
- 14: Operation display
- 15, 24: Sheet feeder
- 16, 25, 35: Conveyor
- 17: Image former
- 18: Fixer
- 20: Sheet feed device
- 30: Sheet characteristic detection device
- 34: Sheet characteristic detector
- 36: Sheet ejector
- 41: Housing
- 41H: Opening
- 411: Bottom portion
- 412: Cover
- 42: Light emitter
- 43, 44: Light receiver
- 45: Shutter
- 46: Drive mechanism
- 47: Calibration plate
- 90: Sheet

## Claims

1. A sheet characteristic detection device (30) comprising:
a housing (41) provided with an opening (41H);
a light emitter (42) housed in the housing (41) and emitting light toward the opening (41H);
a light receiver (43, 44) housed in the housing (41) and receiving reflected light of the light emitted from the light emitter (42);
a shutter (45) housed in the housing (41) and switchable between a closed state in which the shutter closes the opening (41H) and an open state in which the shutter opens the opening (41H); and
a drive mechanism (46) housed in the housing (41) and driving the shutter (45),
the sheet characteristic detection device detecting a characteristic of a sheet (90) by applying light from the light emitter (42) to the sheet (90) through the opening (41H) and detecting reflected light that is reflected by the sheet (90) and that transmits through the opening (41H) by the light receiver (43, 44),
the sheet characteristic detection device (30) including a detector (31) that detects whether the shutter (45) is opened or closed, using a phenomenon in which the shutter (45) blocks light from the light emitter (42) or reflected light of the light during opening or closing of the shutter (45).

2. The sheet characteristic detection device (30) according to claim 1, wherein, when the phenomenon in which the shutter (45) blocks light from the light emitter (42) or reflected light of the light does not occur after an opening operation of the shutter (45) is instructed, the detector (31) detects that the shutter (45) remains in the closed state and is unable to transition to the open state.

3. The sheet characteristic detection device (30) according to claim 1 or 2, wherein the detector (31) detects whether the shutter (45) is opened or closed based on a detection value of the light receiver (43, 44).

4. The sheet characteristic detection device (30) according to claim 2, wherein, when a difference between a detection value of the light receiver (43, 44) before the opening operation of the shutter (45) is instructed and a detection value of the light receiver (43, 44) after a predetermined time has elapsed since the opening operation is instructed is equal to or less than a predetermined threshold value, the detector (31) detects that the shutter (45) remains in the closed state and is unable to transition to the open state.

5. The sheet characteristic detection device (30) according to claim 1 or 2, further comprising a calibration plate (47) provided on a surface of the shutter (45) facing the light emitter in the closed state.

6. The sheet characteristic detection device (30) according to claim 1 or 2, wherein
the light receiver (43, 44) includes a plurality of light receivers (43, 44), and
the detector (31) detects whether the shutter (45) is opened or closed based on a detection value of one light receiver selected from the plurality of light receivers (43, 44).

7. The sheet characteristic detection device (30) according to claim 1 or 2, wherein
the light receiver (43, 44) includes a first light receiver (43) that receives specular reflection light from the sheet (90) and a second light receiver (44) that receives diffuse reflection light from the sheet (90), and
the detector (31) detects whether the shutter (45) is opened or closed based on a detection value of the second light receiver (44).

8. The sheet characteristic detection device (30) according to claim 2, wherein, when the detector (31) detects that the shutter (45) remains in the closed state and is unable to transition to the open state after the opening operation of the shutter (45) is instructed, the opening operation of the shutter (45) is again instructed, and an operation of detecting whether the shutter (45) is opened or closed is repeated.

9. The sheet characteristic detection device (30) according to claim 8, wherein,
when the detector (31) detects that the shutter (45) has transitioned from the closed state to the open state before the operation is repeated a predetermined number of times, an operation of detecting the characteristic of the sheet (90) is performed, and
when the detector (31) does not detect that the shutter (45) has transitioned from the closed state to the open state even after the operation has been repeated a predetermined number of times, a notification indicating an abnormality is provided.

10. The sheet characteristic detection device (30) according to claim 2, wherein
the housing (41) is provided on a discharge path of the sheet (90), and
only a discharge of the sheet (90) is performed when the detector (31) detects that the shutter (45) remains in the closed state and is unable to transition to the open state.

11. The sheet characteristic detection device (30) according to claim 1 or 2, wherein, when an abnormality other than an opening/closing failure of the shutter (45) is detected, a notification indicating the abnormality is provided so as to be distinguishable from the opening/closing failure of the shutter (45).

12. The sheet characteristic detection device (30) according to claim 11, wherein the abnormality other than the opening/closing failure of the shutter (45) includes an abnormality of the light emitter (42).

13. An image forming system (1) comprising the sheet characteristic detection device (30) according to claim 1 or 2.
